# EUROPÄISCHE PATENTANMELDUNG

(11) **EP 3 805 301 A1**
(43) Veröffentlichungstag der Anmeldung: **14.04.2021**
(21) Anmeldenummer: 19202360.4
(22) Anmeldetag: 10.10.2019
(51) Int. Cl.: C08K 3/34, C08K 5/14

(54) **LAGERSTABILE HÄRTERZUSAMMENSETZUNG FÜR EIN REAKTIONSHARZ**

(71) Anmelder: Hilti Aktiengesellschaft, 9494 Schaan (LI)
(72) Erfinder: Kumru, Memet-Emin, 86199 Augsburg (DE); Bürgel, Thomas, 86899 Landsberg (DE)
(74) Vertreter: Hilti Aktiengesellschaft Corporate Intellectual Property

(57) **Zusammenfassung**

Es wird eine lagerstabile Härterzusammensetzung für ein Reaktionsharz auf Basis einer radikalisch härtbaren Verbindung, umfassend Wasser, ein Peroxid und ein Rheologieadditiv, wobei das Rheologieadditiv ein Rheologieadditiv auf Basis eines Schichtsilikats ist, und ein Reaktionsharzsystem enthaltend diese Härterzusammensetzung als Härterkomponente und eine Harzkomponente mit einem Reaktionsharz auf Basis radikalisch härtbarer Verbindungen beschrieben. Das Reaktionsharzsystem findet mit einer gewindeformenden Schraube Anwendung.

## Beschreibung

Die Erfindung betriff eine Härterzusammensetzung für ein Reaktionsharz zur Verwendung mit gewindeformenden Schrauben, insbesondere eine lagerstabile Härterzusammensetzung auf Basis eines Peroxid-Wasser-Systems.

Die für die chemische Befestigungstechnik verwendeten mindestens zweikomponentigen Mörtelmassen enthalten im Allgemeinen in der einen Komponente, das heißt der Harzkomponente, ein durch radikalische Polymerisation härtbares Harz, beispielsweise ein ungesättigtes Polyesterharz, ein Epoxyacrylatharz oder ein Urethanmethacrylatharz, welche Harze in copolymerisierbaren Reaktivverdünnern wie Styrol oder monomeren Methacrylaten gelöst sein können. Diese Harzkomponente enthält üblicherweise neben dem Harz weitere Additive, wie Beschleuniger, Inhibitoren und dergleichen, sowie auch Füllstoffe oder Verdickungsmittel.

Die zweite notwendige Komponente einer solchen Mörtelmasse für die chemische Befestigungstechnik, das heißt die Härterkomponente, enthält den für die Polymerisation des härtbaren Harzes notwendigen Radikalbildner, beispielsweise ein Peroxid. Da die für die radikalische Polymerisation der Harzkomponente erforderliche Menge des Radikalbildners sehr viel geringer ist als die Menge des Harzes in der Harzkomponente und darüber hinaus die Radikalbildner, namentlich die Peroxide, sich explosionsartig zersetzen können, enthält die Härterkomponente üblicherweise ein Trägermaterial oder Phlegmatisierungsmittel, mit welchem das Volumen der Härterkomponente auf einen vernünftigen Wert gebracht und die Explosionsgefahr des Radikalbildners herabgesetzt wird. Die Härterkomponente besteht somit aus einer oder enthält eine Härterzusammensetzung.

Schließlich ist es möglich, noch weitere chemisch mit der Harzkomponente und der Härterkomponente reagierende Bestandteile in einer oder mehreren weiteren Komponenten vorzusehen, in denen diese Bestandteile getrennt voneinander vorliegen, so dass keine vorzeitige Reaktion eintreten kann.

Bei der bestimmungsgemäßen Verwendung werden die räumlich getrennt vorliegenden Komponenten, namentlich die Harzkomponente und die Härterkomponente, in getrennten Behältern, etwa Mehrkammer-Beutel während der Anwendung vermischt, indem der Mehrkammer-Beutel in das Bohrloch gesteckt wird und durch das drehende Einführen eines entsprechenden Befestigungselements, beispielsweise eine gewindeformende Schraube die Behälter zerkleinert und die darin enthaltenen Komponenten vermischt werden.

Durch diese Verwendungsart eines Reaktionsharzes ergeben sich andere Anforderungen an die Eigenschaften sowohl der einzelnen Komponenten als auch der Mischung daraus als für die Verwendung mit Injektionsapparaten, bei der die Masse vor dem Einbringen in das Bohrloch gemischt wird.

Es ergeben sich Probleme dadurch, dass in der Regel die Menge des Härters, das heißt des Radikalbildners, wie des Peroxids, sehr viel geringer ist als die Menge des Harzes in der Harzkomponente, was die zur Erzielung gleichbleibender guter und reproduzierbarer Festigkeitswerte erforderliche homogene Durchmischung diese beiden Bestandteile erheblich erschwert. Andererseits sind gewisse Radikalbildner, beispielsweise Dibenzoylperoxid fest, so dass die Härterzusammensetzung in der Regel ein Verdünnungsmittel enthält, um den Radikalbildner entweder zu lösen oder zu dispergieren und insgesamt in einem größeren Volumen vorzulegen, welches sich einfacher mit der Harzkomponente vermischen lässt. In diesem Zusammenhang sind Volumenverhältnisse von Harzkomponente zu Härterkomponente von 7:1 bis 1:1 üblich, was allerdings zur Folge hat, dass der Härterzusammensetzung und somit der Härterkomponente nicht zu vernachlässigende Mengen an flüssigen Trägermaterialien zugesetzt werden müssen, um dieses Volumenverhältnis einzustellen.

Wird das Reaktionsharzsystem bestimmungsgemäß, also mit einer gewindeformenden Schraube verwendet, wird die Schraube in ein zuvor mit einer aushärtbaren Masse befülltes Bohrloch gesetzt. Hierbei ist der Ringspalt zwischen der Mantelfläche des Grundkörpers und der Bohrlochwandung für die meisten Arten von aushärtbaren Massen, die sehr hoch mit anorganischen Füllstoffen gefüllt sind, zu klein. Somit können lediglich dünnflüssige, aushärtbare Massen verwendet werden, die verhältnismäßig teuer sind und im Vergleich zu aushärtbaren Massen mit Füllstoffen eine geringere Festigkeit aufweisen.

Die für Ankerstangen bekannten Patronensysteme, wie sie etwa aus der EP 0 431 302 A2, der EP 0 432 087 A1, der EP 0 312 776 A1 oder der EP 0 638 705 A1 bekannt sind, sind aufgrund des sehr kleinen Ringspalts für die Anwendung mit selbstscheidenden Schrauben nicht geeignet, da sie entweder zu grobkörnige Füllstoffe enthalten oder die Patronen nicht mit herkömmlichen gewindeformenden Schrauben zerkleinert werden können oder die Patronen selbst beim Zerkleinern zu große Partikel ergeben. Da bei dieser Anwendung nur wenige Schraubendrehungen möglich sind, bis die Schraube gesetzt ist, muss eine schnelle Durchmischung der aushärtbaren Masse gewährleistet sein, damit diese zuverlässig aushärtet, was mit den bekannten Massen bisher nicht möglich ist. Hierzu sind hinreichend dünnflüssige Komponenten erforderlich.

Nach dem Stand der Technik werden zur Einstellung der Fließfähigkeit und der Konzentration des Radikalbildners in der Härterzusammensetzung beziehungsweise des Volumens der Härterzusammensetzung sogenannte Phlegmatisierungsmittel verwendet, die einerseits als Verdünnungsmittel und andererseits dazu dienen, eine unerwünschte Zersetzung der Radikalbildner zu vermeiden. Als solche Phlegmatisierungsmittel wurden bereits verschiedene Arten von nichtreaktiven Weichmachern, beispielsweise Dicarbonsäureester, wie Dioctylphthalat, Dioctyladipat, flüssige Polyester oder Polyalkylenglykolderivate verwendet, wozu auf die DE 32 26 602 A1, EP 0 432 087 A1 und EP 1 371 671 A1 verwiesen werden kann. Nachteilig an den Phlegmatisierungsmitteln ist, dass in dem ausgehärteten Mörtel als Weichmacher wirken.

Aus der DE 42 31 161 A1 ist weiterhin ein organisches/anorganisches Hybridsystem bekannt, welches es ermöglicht, als Phlegmatisierungsmittel Wasser einzusetzen. Dies hat den Vorteil, dass nach dem Vermischen der Komponenten das Wasser durch die vorhandenen hydraulisch kondensierbaren Verbindungen gebunden wird und somit in der ausgehärteten Masse keine weichmachende Funktion mehr hat.

Ein Nachteil des wässrigen Hybridsystems besteht jedoch darin, dass die Herstellung einer auf dieser Basis formulierte Härterzusammensetzung aufwändig ist, da die mit Wasser phlegmatisierten Peroxide nicht sedimentationsstabil sind. Die Härterzusammensetzungen müssen vor dem Abfüllen aufgerührt und mit verdickenden Additiven versetzt werden. Die dadurch erhaltene Härterzusammensetzungen sind jedoch zu viskos für die Verwendung mit gewindeformenden Schrauben, so dass die üblichen Verdickungsmittel, wie pyrogene Kieselsäuren, nicht verwendet werden können.

Es hat sich nunmehr gezeigt, dass die herkömmlichen Ansätze zur Ausbildung der Härterzusammensetzung als Härterkomponente einer solchen mindestens zweikomponentigen Mörtelmasse für die Verwendung mit gewindeformenden Schrauben nicht voll zu befriedigen vermögen, weil entweder die Viskosität der herkömmlichen Härterzusammensetzungen zu hoch ist, dass diese mit gewindeformenden Schrauben verwendet werden kann, oder bei hinreichend niedriger Viskosität die Stabilität namentlich im Hinblick auf die Sedimentation der festen Peroxide unbefriedigend ist.

Die Aufgabe der vorliegenden Erfindung besteht somit darin, eine Härterzusammensetzung zur Verwendung als Härterkomponente für eine mindestens zweikomponentige Mörtelmasse bereitzustellen, mit der es nicht nur in einfacher Weise gelingt, die erforderliche Fließfähigkeit der Härterkomponente zur Verwendung mit gewindeformenden Schrauben zu erreichen, sondern auch eine hohe Stabilität der Härterkomponente sicherzustellen.

Es hat sich gezeigt, dass diese Aufgabe dadurch gelöst werden kann, dass die Härterzusammensetzung neben dem Radikalbildner Wasser und ein Rheologieadditiv auf Basis eines Schichtsilikats enthält.

Zum besseren Verständnis der Erfindung werden die folgenden Erläuterungen der hierin verwendeten Terminologie als sinnvoll erachtet. Im Sinne der Erfindung bedeuten:
- "*Reaktionsharzmischung*" eine Mischung aus mindestens einem Reaktionsharz und/oder mindestens einem Reaktivverdünner, wobei die Mischung gegebenenfalls einen Beschleuniger und/oder einen Inhibitor enthalten kann;
- "*Reaktionsharz auf Basis einer radikalisch härtbaren Verbindung*", kurz auch "Reaktionsharz" oder "*Basisharz*" genannt, eine üblicherweise feste oder hochviskose "*radikalisch härtbare*", d.h. radikalisch polymerisierbare Verbindung, welche durch Polymerisation härtet und eine Harzmatrix bildet; das Reaktionsharz ist das Umsetzungsprodukt einer Bulkreaktion an sich; hiervon ist auch der Reaktionsansatz zur Herstellung des Basisharzes nach beendeter Reaktion umfasst, der ohne Isolierung des Produkts vorliegt und daher neben der radikalisch härtbaren Verbindung, das Reaktionsharz, einen Reaktivverdünner, einen Stabilisator und einen Katalysator, sofern verwendet, enthalten kann;
- "*Reaktivverdünner*" flüssige oder niedrigviskose Monomere und Oligomere, welche das Reaktionsharz verdünnen und dadurch die zu deren Applikation notwendige Viskosität verleihen, zur Reaktion mit dem Reaktionsharz befähigte funktionelle Gruppen enthalten und bei der Polymerisation (Härtung) zum überwiegenden Teil Bestandteil der gehärteten Masse werden;
- "*Inhibitor*" eine zur Inhibierung der Polymerisationsreaktion (Härtung) fähige Verbindung, die dazu dient, die Polymerisationsreaktion und damit ein unerwünschtes vorzeitiges Polymerisieren des Reaktionsharzes während der Lagerung zu vermeiden (in dieser Funktion oftmals auch als Stabilisator bezeichnet) und/oder den Start der Polymerisationsreaktion unmittelbar nach der Zugabe des Härtungsmittels zu verzögern; welche Aufgabe der Inhibitor hat, hängt davon ab, in welchen Mengen er eingesetzt wird;
- "*Härtungsmittel*" ein Stoff, welcher die Polymerisation (das Härten) des der radikalisch härtbaren Verbindung, wie des Reaktionsharzes, bewirkt bzw. initiiert;
- "*Beschleuniger*" eine zur Beschleunigung der Polymerisationsreaktion (Härtung) fähige Verbindung, die dazu dient, die Bildung von Radikalen, insbesondere aus dem Härtungsmittel, zu beschleunigen, d.h. das Härtungsmittel schneller zu aktivieren;
- "*festes Peroxid*", ein Stoff (Härtungsmittel), welcher bei einer Temperatur von 20°C einen festen Aggregatzustand aufweist und eine Peroxygruppe -O-O- enthält, die homolytisch unter geringer Energieaufwendung, z. B. durch Lichteinstrahlung (photolytisch) oder Zuführung von Wärme (thermolytisch) gespaltet werden kann; hierbei werden zwei radikalische Fragmente gebildet, welche eine radikalische Reaktion (z. B. Polymerisation) starten können;
- "*Harzkomponente*" eine Mischung aus dem Reaktionsharz und anorganischen und/oder organischen Zuschlagstoffen (Füllstoffe und Additive), wie etwa einem Inhibitor und/oder einem Beschleuniger;
- "*Härterzusammensetzung*" eine Mischung aus dem Härtungsmittel und anorganischen und/oder organischen Zuschlagstoffen (Füllstoffe und Additive), wie etwa ein Phlegmatisierungsmittel, d.h. Stabilisierungsmittel für das Härtungsmittel;
- "*Härterkomponente*" die Komponente eines zwei- oder mehrkomponentigen Reaktionsharzsystems, welche aus der Härterzusammensetzung besteht oder diese als Bestandteil enthält;
- "*Füllstoff*" eine organische oder anorganische, insbesondere anorganische Verbindung, die passiv und/oder reaktiv und/oder funktional sein kann; *"passiv"* bedeutet dabei, dass die Verbindung unverändert von der härtenden Harzmatrix umschlossen wird; *"reaktiv"* bedeutet dabei, dass die Verbindung in die Harzmatrix einpolymerisiert und ein erweitertes Netzwerk mit den Harzkomponenten bildet; *"funktional"* bedeutet dabei, dass die Verbindung nicht in die Harzmatrix einpolymerisiert aber eine bestimmte Funktion in der Formulierung erfüllt;
- *"zweikomponentiges Reaktionsharzsystem"* ein Reaktionsharzsystem, das zwei voneinander getrennt gelagerte Komponenten, im Allgemeinen eine Harzkomponente und eine Härterkomponente, umfasst, so dass eine Härtung des Reaktionsharzes erst nach dem Mischen der beiden Komponenten erfolgt;
- *"mehrkomponentiges Reaktionsharzsystem"* ein Reaktionsharzsystem, das mehrere voneinander getrennt gelagerte Komponenten umfasst, so dass eine Härtung des Reaktionsharzes erst nach dem Mischen aller Komponenten erfolgt;
- *"(Meth)acryl...*/*...(meth)acryl..."*, dass sowohl die "Methacryl.../...methacryl..."- als auch die "Acryl.../...acryl..."-Verbindungen umfasst sein sollen; bevorzugt sind in der vorliegenden Erfindung "Methacryl.../...methacryl..." -Verbindungen;
- *"ein", "eine", "einer"* als Artikel vor einer chemischen Verbindungsklasse, z.B. vor dem Wort "Reaktivverdünner", dass eine oder mehrere unter diese chemische Verbindungsklasse fallende Verbindungen, z.B. verschiedene *"Reaktivverdünner"*, gemeint sein können;
- *"mindestens ein"*, *"mindestens eine"*, *"mindestens einer"* zahlenmäßig *"ein oder mehrere"*; in einer bevorzugten Ausführungsform ist mit diesem Begriff zahlenmäßig *"ein", "eine", "einer"* gemeint;
- *"enthalten"*, *"umfassen"* und *"beinhalten"*, dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten"*, *"umfassen"* und *"beinhalten"* den Begriff *"bestehen aus".*

Ein erster Gegenstand der Erfindung ist die Härterzusammensetzung gemäß Anspruch 1. Die Unteransprüche 2 bis 9 betreffen bevorzugte Ausführungsformen dieses Erfindungsgegenstandes.

Ein zweiter Gegenstand der Erfindung ist ferner ein mehrkomponentiges Reaktionsharzsystem nach Anspruch 10, mit einer Harzkomponente, umfassend eine radikalisch härtbare Verbindung, und mit einer Härterzusammensetzung, umfassend eine Härterzusammensetzung nach Anspruch 1. Die weiteren Unteransprüche 11 bis 16 betreffen bevorzugte Ausführungsformen dieses Erfindungsgegenstandes.

Ein dritter Gegenstand der Erfindung ist ferner die Verwendung der mehrkomponentigen Mörtelmasse nach Anspruch 17 zur Befestigung und/oder Verstärkung von gewindeformenden Schrauben in festen Untergründen, insbesondere in Stein oder Beton.

Die erfindungsgemäße Härterzusammensetzung enthält neben Wasser als Phlegmatisierungsmittel ein festes Peroxid als Radikalbildner, vorzugsweise ein organisches Peroxid. Besonders bevorzugte feste Peroxide sind aus der Gruppe bestehend aus Alkylperoxiden, Dialkylperoxiden, Diacylperoxiden, Alkylhydroperoxiden, Hydroperoxiden, Perocarbonaten, Perketalen und anorganische Peroxiden ausgewählt, sofern diese fest sind. Gemäß einer am meisten bevorzugten Ausführungsform enthält die Härterzusammensetzung als Radikalbildner Diacetylperoxid, Di-*p-*chlorobenzoylperoxid, Phthaloylperoxid, Succinylperoxid, Dilaurylperoxid, Acetylcyclohexansulfonylperoxid, Cyclohexanpercarbonat, Bis(4-*t-*butylcyclohexyl)percarbonat, ein Siliciumperoxid, Cyclohexanonperoxid, Dibenzoylperoxid und/oder Dilauroylperoxid. Für die Verarbeitung in einem Temperaturbereich von -25°C bis +60°C und damit auf den üblichen Baustellen im Freien ist besonders bevorzugt der Einsatz von Diacylperoxiden, wie Dibenzoylperoxid oder Dilauroylperoxid.

Bevorzugt liegt das Peroxid zusammen mit dem Wasser als Suspension vor. Entsprechende Suspensionen sind in unterschiedlichen Konzentrationen kommerziell erhältlich, wie beispielsweise die wässrigen Dibenzoylperoxid-Suspensionen von United Initiators (BP20SAQ, BP40SAQ). Perkadox 40L-W (Fa. Nouryon), Luperox® EZ-FLO (Fa. Arkema), Peroxan BP40W (Fa. Pergan).

Das Peroxid kann in einer Menge von 2 bis 50 Gew.-%, bevorzugt 5 bis 45 Gew.-%, besonders bevorzugt 10 bis 40 Gew.-%, bezogen auf die Harzkomponente, in den Reaktionsharzsystem enthalten sein.

Die erfindungsgemäße Härterzusammensetzung enthält als Rheologieadditiv ein Rheologieadditiv auf Basis eines Schichtsilikats, insbesondere eines aktivierten oder quellfähigen Schichtsilikats. Besonders bevorzugt ist das quellfähige Schichtsilikat ein Magnesium-Aluminium-Silikat oder ein Natrium-Aluminium-Silikat.

In einer bevorzugten Ausführungsform besteht das Rheologieadditiv aus dem quellfähigen Schichtsilikat oder enthält dieses als Hauptbestandteil. *"Hauptbestandteil"* bedeutet dabei, dass das quellfähige Schichtsilikat mehr als die Hälfte des Rheologieadditivs ausmacht, also mehr als 50 Gew.-%, insbesondere 60 bis 80 Gew.-%. Den Rest bilden weitere Mineralien, wie Tonmineralien, insbesondere Begleitminearlien.

Besonders bevorzugt ist das Rheologieadditiv Montmorillonit oder enthält dieses als Hauptbestandteil, beispielsweise Bentonit.

Die Menge des einzusetzenden Rheologieadditivs hängt im Wesentlichen von der Wassermenge ab, wobei der Fachmann ohne weiteres in der Lage ist, das richtige Verhältnis dieser Bestandteile und auch der gegebenenfalls anzuwendenden Bestandteile derart auszuwählen, dass die Härterzusammensetzung die erforderliche Viskosität und Fließfähigkeit besitzt. Bevorzugt enthält die Härterzusammensetzung das Rheologieadditiv in einer Menge von 0,15 bis 5 Gew.-%, besonders bevorzugt 1 bis 3 Gew.-%, bezogen auf das Gesamtgewicht der Härterzusammensetzung, enthalten ist.

In einer alternativen Ausführungsform kann dem Rheologieadditiv ein weiterer anorganischer Verdicker, insbesondere auf der Basis von Kieselsäuren, wie beispielsweise eine hydrophile pyrogene Kieselsäure.

Bevorzugt enthält die erfindungsgemäße Härterzusammensetzung außer dem Rheologieadditiv auf Basis eines Schichtsilikats keine weiteren Zuschlagstoffe, wie Füllstoffe und/oder Additive.

Ganz besonders bevorzugt ist das Rheologieadditiv frei von organischen Verdickungsmitteln, insbesondere Polysacchariden, wie Xanthan oder Cellulose.

Neben den eben aufgeführten Bestandteilen, kann die Härterzusammensetzung ferner noch weitere Additive, wie Tenside, Emulgatoren, Frostschutzmittel, Puffer und dergleichen, enthalten.

Dennoch kann die Härterzusammensetzung zusätzlich zu dem Rheologieadditiv auf Basis eines Schichtsilikats die unten für die Harzkomponente beschriebenen Füllstoffe in geringen Mengen enthalten. Die Mengen sind dabei so zu wählen, dass die Eigenschaften, wie Viskosität oder Fließfähigkeit und dergleichen, der Härterzusammensetzung bzw. einer diese enthaltenden Härterkomponente und insbesondere die Stabilität der Härterzusammensetzung bzw. einer diese enthaltenden Härterkomponente nicht negativ beeinflusst werden.

Das Wasser ist in solch einer Menge enthalten, dass, abhängig von den Bestandteilen der Härterzusammensetzung, sich die Gew.-% auf 100 addieren.

Die erfindungsgemäße Härterzusammensetzung kann in einem mehrkomponentigen Reaktionsharzsystem, was auch zweikomponentige Reaktionsharzsysteme miteinschließt, als Härterkomponente verwendet werden.

Ein weiterer Gegenstand der Erfindung ist demnach ein mehrkomponentiges Reaktionsharzsystem, umfassend eine Harzkomponente und die oben beschriebene Härterzusammensetzung als Härterkomponente. Die Harzkomponente enthält mindestens eine radikalisch härtbare Verbindung. Die radikalisch härtbare Verbindung kann ein Reaktionsharz sein. Alternativ kann die eine radikalisch härtbare Verbindung ein Reaktivverdünner sein. Gemäß einer weiteren Alternative kann die radikalisch härtbare Verbindung auch eine Mischung aus mindestens einem Reaktionsharz und mindestens einem Reaktivverdünner, eine Reaktionsharzmischung, umfassen.

Geeignete radikalisch härtbare Verbindungen als Reaktionsharz sind ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Besonders bevorzugt ist die radikalisch härtbare Verbindung, das Reaktionsharz, eine ungesättigte Verbindung auf Urethan(meth)acrylatbasis, Epoxy(meth)acrylatbasis, ein (Meth)acrylat eines alkoxylierten Bisphenols oder eine Verbindung auf Basis weiterer ethylenisch ungesättigter Verbindungen.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze. Diesbezüglich wird die DE 10 2011 017 626 B4, und vor allem ihre Beschreibung der Zusammensetzung dieser Harze, insbesondere in den Beispielen der DE 10 2011 017 626 B4, hier durch Bezugnahme aufgenommen.

Beispiele geeigneter ungesättiger Polyester, die erfindungsgemäß verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in DE 10 2011 017 626 B4 beschriebenen Urethanmethacrylatharze (die auch als Vinylesterurethanharze bezeichnet werden), deren Zusammensetzung hier durch Bezugnahme aufgenommen wird.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglycol-mono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Reaktionsharze, die erfindungsgemäß als radikalisch härtbare Verbindungen verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Reaktionsharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

In einer Ausführungsform enthält die Harzkomponente des Reaktionsharzsystems zusätzlich zu dem Reaktionsharz mindestens eine weitere niederviskose, radikalisch polymerisierbare Verbindung als Reaktivverdünner. Diese wird zweckmäßig zu dem Reaktionsharz gegeben und ist daher in der Harzkomponente enthalten.

Geeignete, insbesondere niederviskose, radikalisch härtbare Verbindungen als Reaktivverdünner sind in den Anmeldungen EP 1 935 860 A1 und DE 195 31 649 A1 beschrieben. Vorzugsweise enthält das Reaktionsharzsystem als Reaktivverdünner einen (Meth)acrylsäureester, wobei besonders bevorzugt folgende (Meth)acrylsäureester verwendet werden können: Hydroxyalkyl(meth)acrylate wie Hydroxypropyl(meth)acrylat, 2-Hydroxyethyl(meth)acrylat; Alkandiol(meth)acrylate wie Ethandiol-1,2-di(meth)acrylat, Propandiol-1,3-di(meth)acrylat, Butandiol-1,2-di(meth)acrylat, Butandiol-1,3-di(meth)acrylat, Butandiol-1,4-di(meth)acrylat, Hexandiol-1,6-di(meth)acrylat, 2-Ethylhexyl(meth)acrylat, Phenylethyl-(meth)acrylat, Tetrahydrofurfuryl(meth)acrylat; Trimethylolpropantri(meth)acrylat; Ethyltriglykol(meth)acrylat; N,N-Dimethylaminoethyl(meth)acrylat; N,N-Dimethylaminomethyl(meth)acrylat; Acetoacetoxyethyl(meth)acrylat; Alkylen(meth)acrylate wie Ethylen- und Diethylenglykoldi(meth)acrylat; Oligo- und Polyalkylenglykoldi(meth)acrylate wie PEG200di(meth)acrylat; Methoxypolyethylenglykolmono(meth)acrylat; Trimethylcyclohexyl(meth)acrylat; Dicyclopentenyloxyethyl(meth)acrylat; Tricyclopentadienyldi(meth)acrylat; Dicyclopentenyloxyethylcrotonat; Bisphenol-A-(meth)acrylat; Novolakepoxidi(meth)acrylat; Di-[(meth)acryloyl-maleoyl]-tricyclo-5.2.1.0.^{2.6}-decan; 3-(Meth)acryloyl-oxymethyl-tricylo-5.2.1.0.^{2.6}-decan; 3-(Meth)cyclopentadienyl(meth)-acrylat; Isobornyl(meth)acrylat; Decalyl-2-(meth)acrylat; Tetrahydrofurfuryl(meth)acrylat; und alkoxylierte Tri-, Tetra- und Pentamethylacrylate.

Grundsätzlich können auch andere übliche radikalisch polymerisierbaren Verbindungen, allein oder im Gemisch mit den im vorhergehenden Absatz beschriebenen (Meth)acrylsäureestern, eingesetzt werden, z.B. Styrol, α-Methylstyrol, alkylierte Styrole, wie tert-Butylstyrol, Divinylbenzol und Vinyl- sowie Allylverbindungen. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Bevorzugte Reaktivverdünner sind die in den Beispielen verwendeten weiteren Reaktivverdünner.

Die radikalisch härtbare Verbindung kann in einer Menge von 10 bis 99,99 Gew.-%, bevorzugt 15 bis 97 Gew.-%, besonders bevorzugt 30 bis 95 Gew.-%, bezogen auf die Harzkomponente, in dem Reaktionsharzsystem enthalten sein. Hierbei kann die radikalisch hätbare Verbindung entweder ein Reaktionsharz auf Basis eine radikalisch härtbaren Verbdinung oder ein Reaktivverdünner oder eine Mischung eines Reaktionsharzes mit zwei oder mehreren Reaktivverdünnern sein.

Für den Fall, dass die radikalisch härtbare Verbindung eine Reaktionsharzmischung ist, so entspricht die Menge der Mischung, die in dem Reaktionsharzsystem enthalten sein kann, der Menge der radikalisch härtbaren Verbindung, nämlich von 10 bis 99,99 Gew.-%, bevorzugt 15 bis 97 Gew.-%, besonders bevorzugt 30 bis 95 Gew.-%, bezogen auf die Harzkomponente, wobei, bezogen auf die Reaktionsharzmischung, der Anteil des Reaktionsharzes 0 bis 100 Gew.-%, bevorzugt 30 bis 65 Gew.-% und der Anteil des Reaktivverdünners oder einer Mischung aus mehreren Reaktivverdünnern 0 bis 100 Gew.-%, bevorzugt 35 bis 70 Gew.-% beträgt.

Die Gesamtmenge der radikalisch härtbaren Verbindung hängt von dem Füllgrad, also der Menge der anorganischen Füllstoffe, einschließlich der nachfolgend aufgeführten Füllstoffe, insbesondere die hydrophilen Füllstoffe, die weiteren anorganischen Zuschlagstoffe und die hydraulisch abbindenden bzw. polykondensierbaren Verbindungen.

In einer weiteren Ausführungsform enthält die Harzkomponente des erfindungsgemäßen Reaktionsharzsystems des Weiteren mindestens einen Beschleuniger. Hierdurch wird die Härtungsreaktion beschleunigt.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin- und Toluidin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und *para*-Toluidin Ethoxylat (Bisomer® PTE).

Der Beschleuniger kann in einer Menge von 0 bis 10 Gew.-%, bevorzugt 0,01 bis 5 Gew.-%, besonders bevorzugt 0,5 bis 3 Gew.-%, bezogen auf die Harzkomponente, in den Reaktionsharzsystem enthalten sein.

In einer noch weiteren Ausführungsform enthält die Harzkomponente des erfindungsgemäßen Reaktionsharzsystems des Weiteren einen Inhibitor sowohl für die Lagerstabilität der Harzkomponente als auch zur Einstellung der Gelzeit. Der Inhibitor kann alleine oder zusammen mit dem Beschleuniger in dem Reaktionsharzsystem enthalten sein. Bevorzugt wird zur Einstellung der Verarbeitungszeit bzw. Gelzeit eine entsprechend aufeinander abgestimmte Beschleuniger-Inhibitor-Kombination eingesetzt.

Als Inhibitoren sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-Oxyl-Radikale können beispielsweise solche verwendet werden, wie sie in der DE 199 56 509 beschrieben sind. Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugte Inhibitoren sind 1-Oxyl-2,2,6,6-tetramethylpiperidin (TEMPO) und 1-Oxyl-2,2,6,6-tetramethylpiperidin-4-ol (TEMPOL), Katechole, besonders bevorzugt *tert*-Butyl-Brenzkatechin und Brenzk durch die funktionelle Gruppe werden die gewünschten Eigenschaften erreicht (im Vergleich zu den sonst verwendeten Reaktivverdünnern), BHT und Phenothiazin.

Die Inhibitoren können, abhängig von den gewünschten Eigenschaften des Reaktionsharzsystems, entweder alleine oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelzeit der Reaktionsharz-Zusammensetzung zeigt.

Der Inhibitor kann in einer Menge von 0 bis 5 Gew.-%, bevorzugt 0,001 bis 3 Gew.-%, besonders bevorzugt 0,01 bis 1 Gew.-%, bezogen auf die Harzkomponente, in den Reaktionsharzsystem enthalten sein. Sind mehrere Inhibitoren enthalten, so entspricht die eben genannte Menge der Gesamtmenge an Inhibitoren.

Gemäß einer Ausführungsform enthält die Harzkomponente anorganische Zuschlagstoffe, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Füllstoffe liegen in der Harzkomponente vorzugsweise in einer Menge von 0,01 bis zu 90, insbesondere 0,01 bis 60, vor allem 0,01 bis 50 Gew.-% vorhanden.

Weitere denkbare Zusätze sind ferner Rheologieadditive, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

Bei einer Ausführungsform der Erfindung enthält die Harzkomponente neben der vorhandenen radikalisch härtbaren Verbindung zusätzlich noch eine hydraulisch abbindende oder polykondensierbare anorganische Verbindung, insbesondere Zement. Derartige Hybridmörtelsysteme sind ausführlich in DE 42 31 161 A1 beschrieben. Dabei enthält die Harzkomponente vorzugsweise als hydraulisch abbindende oder polykondensierbare anorganische Verbindung Zement, beispielsweise Portlandzement oder Aluminatzement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Harzkomponente kann als polykondensierbare anorganische Verbindung auch silikatische, polykondensierbare Verbindungen, insbesondere lösliches, gelöstes und/oder amorphes Siliziumdioxid enthaltende Stoffe wie z.B. pyrogene Kieselsäure umfassen.

Die hydraulisch abbindende oder polykondensierbare Verbindung kann in einer Menge von 0 bis 30 Gew.-%, bevorzugt 1 bis 25 Gew.-%, besonders bevorzugt 5 bis 20 Gew.-%, bezogen auf die Harzkomponente, in dem Reaktionsharzsystem enthalten sein.

Wie bereits beschrieben, kann, sofern die Viskosität und die Lagerstabilität der Härterzusammensetzung nicht negativ beeinflusst werden, auch die Härterkomponente des Weiteren Füllstoffe und/oder anorganische Zuschlagstoffe enthalten, wobei die Füllstoffe und Zuschlagstoffe dieselben sind, wie sie eben genannt wurden.

Um eine schnelle und zuverlässige Durchmischung beim Einsatz von gewindeformenden Schrauben zu gewährleisten sowie auch eine saubere und sichere Handhabung bei der Verwendung mit gewindeformenden Schrauben zu gewährleisten, ist es erforderlich, die Viskosität nicht nur der Härterkomponente sondern auch der Harzkomponente möglichst niedrig zu halten, aber gleichzeitig eine hohe Viskosität der Masse nach dem Mischen der Harzkomponente und der Härterkomponente zu ermöglichen. Dies ermöglicht ein sauberes und sicheres Setzen der Schrauben, ohne der Gefahr einer Verschmutzung des Anwenders sowie der direkten Arbeitsumgebung.

Daher enthält die Harzkomponente in einer besonders bevorzugten Ausführungsform einen anorganischen Füllstoff mit hydrophilen Eigenschaften.

Hierbei können insbesondere die Oberflächen aber auch die inneren Bestandteile der Füllstoffe hydrophile Eigenschaften aufweisen. Hydrophile Eigenschaften bedeutet dabei, dass die Füllstoffe eine Wechselwirkung mit Wasser eingehen oder mit Wasser reagieren können. Hierdurch wird sichergestellt, dass unmittelbar nach dem Mischen der Harzkomponente und der wasserhaltigen Härterkomponente die erhaltene Masse so viskos wird, dass sie standfest wird, und damit nicht mehr aus dem Bohrloch läuft, was insbesondere bei Überkopfbefestigungen oder bei Wandbefestigungen von Vorteil ist. Insbesondere die Oberflächen der anorganischen Füllstoffe können durch hydrophile Beschichtungen, Grundierungen oder Versiegelungen modifiziert sein.

Beispiele anorganischer Füllstoffe mit hydrophilen Eigenschaften umfassen solche, deren Oberfläche mit einem hydrophilen Oberflächenbehandlungsmittel behandelt ist. Beispiele solcher hydrophilen Oberflächenbehandlungsmittel umfassen unter anderem Silanoberflächenbehandlungsmittel, Titanatoberflächenbehandlungsmittel, Aluminiumoberflächenbehandlungsmittel, Zirkoniumaluminatoberflächenbehandlungsmittel, Al₂O₃, TiO₂, ZrO₂, Silicon und Aluminiumstearat, worunter ein Silanoberflächenbehandlungsmittel bevorzugt ist.

Gemäß einer weiteren bevorzugten Ausführungsform des erfindungsgemäßen mehrkomponentigen Reaktionsharzsystems umfasst der anorganische Füllstoff Mineralstoffe, ausgewählt aus einer Gruppe bestehend aus Erdalkalimetallen und deren Salzen, Bentonit, Carbonaten, Kieselsäuren, Kieselgel, Salzen von Erdalkalimetallen mit Kieselsäure und Silicaten, insbesondere Kieselsäuren.

Der anorganische Füllstoff kann durch ein Trockenverfahren, wie Dampfphasenabscheidung oder Verbrennung, oder durch ein Nassverfahren, wie Fällung, hergestellt werden. Ebenso kann ein kommerziell erhältliches Produkt verwendet werden. Unter Berücksichtigung der rheologischen Eigenschaften des Reaktionsharzsystems ist der hydrophile anorganische Füllstoff bevorzugt ein Feinfüllstoff, mit einer Oberfläche von mehr als 80m²/g, bevorzugt von mehr als 150 m²/g und stärker bevorzugt zwischen 150 und 400 m²/g.

Gemäß einer weiteren bevorzugten Ausführungsform des erfindungsgemäßen mehrkomponentigen Reaktionsharzsystems umfasst der anorganische Füllstoff einen siliziumoxid-basierten Füllstoff.

Gemäß einer weiteren besonders bevorzugten Ausführungsform des erfindungsgemäßen mehrkomponentigen Reaktionsharzsystems umfasst der anorganische Füllstoff eine Kieselsäure.

Die Kieselsäure ist nicht auf eine bestimmte Art oder deren Herstellung beschränkt. Die Kieselsäure kann eine natürliche oder eine synthetische Kieselsäure sein.

Die Kieselsäure ist bevorzugt eine amorphe Kieselsäure, die aus der Gruppe bestehend aus kolloidaler Kieselsäure, nasschemisch hergestellter Kieselsäuren, wie Fällungskieselsäuren, Kieselgele, Kieselsole, pyrogen oder thermisch hergestellte Kieselsäuren, die z.B. im Lichtbogen, Plasma oder durch Flammenhydrolyse hergestellt sind, Kieselrauch, Kieselglas (Quarzglas), Kieselgut (Quarzgut) und Skeletten von Radiolarien und Diatomeen in Form von Kieselgur ausgewählt ist.

Der Anteil des hydrophilen anorganischen Füllstoffs hängt von den gewünschten Eigenschaften des mehrkomponentigen Reaktionsharzsystems ab. Üblicherweise wird der hydrophile anorganische Füllstoff in einer Menge von 0 bis 15 Gew.-%, bevorzugt 0,1 bis 10 Gew.-% und besonders bevorzugt im Bereich von 1 bis 7 Gew.-%, jeweils bezogen auf die Harzkomponente, verwendet, wobei der Gesamtfüllstoffgehalt im oben genannten Bereich liegt, nämlich im Bereich von 0,01 bis zu 90, insbesondere 0,01 bis 60, vor allem 0,01 bis 50 Gew.-%, bezogen auf die Harzkomponente.

In den folgenden beschriebenen Ausführungsformen beziehen sich die Mengenangaben (Gew.-%) jeweils auf die einzelnen Komponenten, also die Harzkomponente und die Härterkomponente, sofern nichts anderes angegeben ist. Die tatsächlichen Mengen sind derart, dass sich die Gew.-% der jeweiligen Komponente auf 100 addieren.

In einer bevorzugten Ausführungsform der erfindungsgemäßen Härterzusammensetzung enthält diese:
- mindestens ein Härtungsmittel, welches ein festes Peroxid ist,
- Wasser; und
- ein Rheologieadditiv auf Schichtsilikatbasis.

In einem bevorzugten Aspekt dieser ersten Ausführungsform ist das feste Peroxid in dem Wasser suspendiert.

In einer weiter bevorzugten Ausführungsform der erfindungsgemäßen Härterzusammensetzung enthält diese:
- mindestens ein Härtungsmittel, welches ein festes Peroxid ist,
- Wasser, und
- ein als Rheologieadditiv auf Basis eines quellfähigen Schichtsilikats.

In einem bevorzugten Aspekt dieser Ausführungsform ist das feste Peroxid in dem Wasser suspendiert.

In einer noch weiter bevorzugten Ausführungsform der erfindungsgemäßen Härterzusammensetzung enthält diese:
- mindestens ein Härtungsmittel, welches ein festes Peroxid ist,
- Wasser, und
- ein Rheologieadditiv auf Basis eines quellfähigen Magnesium-Aluminium-Silikats oder Natrium-Aluminium-Silikats.

In einem bevorzugten Aspekt dieser Ausführungsform ist das feste Peroxid in dem Wasser suspendiert.

In einer ganz besonders bevorzugten Ausführungsform der erfindungsgemäßen Härterzusammensetzung enthält diese:
- mindestens ein Härtungsmittel, welches ein festes Peroxid, insbesondere Dibenzoylperoxid, ist,
- Wasser, und
- Bentonit als Rheologieadditiv auf Basis eines quellfähigen Schichtsilikats.

In einem bevorzugten Aspekt dieser Ausführungsform ist das feste Peroxid in dem Wasser suspendiert.

Die erfindungsgemäße Härterzusammensetzung kann in einem Reaktionsharzsystem als Härterkomponente verwendet werden.

In einer ersten bevorzugten Ausführungsform eines solchen Reaktionsharzsystems enthält die Harzkomponente:
- mindestens eine radikalisch härtbare Verbindung und
- mindestens einen anorganischen Füllstoff,
und die Härterkomponente enthält:
- mindestens ein Härtungsmittel, welches ein festes Peroxid ist;
- Wasser; und
- ein Rheologieadditiv auf Schichtsilikatbasis.

In einem bevorzugten Aspekt dieser ersten Ausführungsform ist das feste Peroxid in dem Wasser suspendiert. In einem weiter bevorzugten Aspekt ist das Reaktionsharz durch einen Inhibitor stabilisiert und/oder die Gelzeit der Mischung aus Harzkomponente und Härterkomponente mit einem - gegebenenfalls weiteren - Inhibitor eingestellt. In einem weiter bevorzugten Aspekt dieser ersten Ausführungsform enthält die Harzkomponente:
- 10 bis 99,99 Gew.-%, bevorzugt 15 bis 97 Gew.-%, besonders bevorzugt 30 bis 95 Gew.-% der mindestens einen radikalisch härtbaren Verbindung, und
- 0,01 bis 90 Gew.-%, bevorzugt 3 bis 85 Gew.-%, besonders bevorzugt 5 bis 70 Gew.-% des mindestens einen anorganischen Füllstoffs,
und die Härterkomponente enthält:
- 2 bis 50 Gew.-%, bevorzugt 5 bis 45 Gew.-%, besonders bevorzugt 10 bis 40 Gew.-% des mindestens einen Härtungsmittels, welches ein Peroxid ist, und
- 50 bis 98 Gew.-%, bevorzugt, 55 bis 95 Gew.-%, besonders bevorzugt 60 bis 90 Gew.-% Wasser, sowie
- 0,15 bis 5 Gew.-%, bevorzugt 1 bis 3 Gew.-% des Rheologieadditivs auf Schichtsilikatbasis.

In einer weiteren bevorzugten zweiten Ausführungsform des Reaktionsharzsystems enthält die Harzkomponente also folglich:
- mindestens eine Reaktionsharzmischung aus mindestens einem Reaktionsharz und mindestens einem Reaktivverdünner als radikalisch härtbare Verbindung; und
- mindestens einen anorganischen Füllstoff,
und die Härterkomponente enthält:
- mindestens ein Härtungsmittel, welches ein festes Peroxid ist,
- Wasser, und
- ein Rheologieadditiv auf Schichtsilikatbasis.

In einem bevorzugten Aspekt dieser zweiten Ausführungsform ist das feste Peroxid in dem Wasser suspendiert. In einem weiteren bevorzugten Aspekt dieser zweiten Ausführungsform enthält die Harzkomponente:
- 85 bis 99,99 Gew.-%, bevorzugt 90 bis 99,9 Gew.-%, besonders bevorzugt 93 bis 99 Gew.-% einer Mischung, der Reaktionsharzmischung, aus 0 bis 99,9 Gew.-%, bevorzugt 20 bis 80 Gew.-%, bezogen auf das Gesamtgewicht der Mischung, des mindestens einen Reaktionsharzes und 0 bis 99,99 Gew.-%, bevorzugt 80 bis 20 Gew.-%, bezogen auf das Gesamtgewicht der Mischung, des mindestens einen Reaktivverdünners als radikalisch härtbare Verbindung, und
- 0,01 bis 15 Gew.-%, bevorzugt 0,1 bis 10 Gew.-%, besonders bevorzugt 1 bis 7 Gew.-% des mindestens einen anorganischen Füllstoffs,
und die Härterkomponente enthält:
- 2 bis 50 Gew.-%, bevorzugt 5 bis 45 Gew.-%, besonders bevorzugt 10 bis 40 Gew.-% des mindestens einen Peroxids als Härtungsmittel und
- 50 bis 98 Gew.-%, bevorzugt, 55 bis 95 Gew.-%, besonders bevorzugt 60 bis 90 Gew.-% Wasser
- 0,15 bis 5 Gew.-%, bevorzugt 1 bis 3 Gew.-% des Rheologieadditivs auf Schichtsilikatbasis.

In einer weiteren bevorzugten dritten Ausführungsform des Reaktionsharzsystems enthält die Harzkomponente:
- eine Reaktionsharzmischung aus mindestens einem Reaktionsharz und einem Reaktivverdünner als radikalisch härtbare Verbindung,
- mindestens einen Inhibitor,
- mindestens einen Beschleuniger, und
- Mindestens einen anorganischen Füllstoff,
und die Härterkomponente enthält:
- mindestens ein Härtungsmittel, welches ein festes Peroxid ist,
- Wasser, und
- ein Rheologieadditiv auf Schichtsilikatbasis.

In einem bevorzugten Aspekt dieser dritten Ausführungsform ist das feste Peroxid in dem Wasser suspendiert. In einem weiteren bevorzugten Aspekt dieser dritten Ausführungsform enthält die Harzkomponente:
- 85 bis 99,99 Gew.-%, bevorzugt 90 bis 99,9 Gew.-%, besonders bevorzugt 93 bis 99 Gew.-% einer Mischung, der Reaktionsharzmischung, aus 0 bis 99,9 Gew.-%, bevorzugt 20 bis 80 Gew.-%, bezogen auf das Gesamtgewicht der Mischung, des mindestens einen Reaktionsharzes und 0 bis 99,99 Gew.-%, bevorzugt 80 bis 20 Gew.-%, bezogen auf das Gesamtgewicht der Mischung, des mindestens einen Reaktivverdünners als radikalisch härtbare Verbindung, und
- 0,011 bis 5 Gew.-%, bevorzugt 0,01 bis 3 Gew.-%, besonders bevorzugt 0,1 bis 1 Gew.-% des mindestens einen anorganischen Füllstoffs,
- 0,01 bis 10 Gew.-%, bevorzugt 0,5 bis 5 Gew.-%, weiter bevorzugt 1 bis 3 Gew.-% des mindestens einen Beschleunigers,
- 0,001 bis 5 Gew.-%, bevorzugt 0,01 bis 3 Gew.-%, weiter bevorzugt 0,1 bis 1 Gew.-% des mindestens einen Inhibitors, und
und die Härterkomponente enthält:
- 2 bis 50 Gew.-%, bevorzugt 5 bis 45 Gew.-%, besonders bevorzugt 10 bis 40 Gew.-% des mindestens einen Peroxids als Härtungsmittel,
- 50 bis 98 Gew.-%, bevorzugt, 55 bis 95 Gew.-%, besonders bevorzugt 60 bis 90 Gew.-% Wasser und
- 0,15 bis 5 Gew.-%, bevorzugt 1 bis 3 Gew.-% des Rheologieadditivs auf Schichtsilikatbasis.

In einem bevorzugten Aspekt dieser Ausführungsform wird die Viskosität der Mischung aus der Harzkomponente und der Härterkomponente durch das anorganische Additiv so eingestellt, dass die Mischung unmittelbar nach dem Mischen standfest wird. In einer weiteren bevorzugten vierten Ausführungsform des Reaktionsharzsystems enthält die Harzkomponente also folglich:
- mindestens eine Reaktionsharzmischung aus mindestens einem Reaktionsharz und einem Reaktivverdünner als radikalisch härtbare Verbindung,
- mindestens einen Inhibitor,
- mindestens einen Beschleuniger, und
- mindestens einen anorganischen Füllstoff mit hydrophilen Eigenschaften,
und die Härterkomponente enthält:
- mindestens ein Härtungsmittel, welches ein festes Peroxid ist,
- Wasser, und
- ein Rheologieadditiv auf Schichtsilikatbasis.

In einem bevorzugten Aspekt dieser vierten Ausführungsform ist das feste Peroxid in dem Wasser suspendiert. In einem weiter bevorzugten Aspekt dieser vierten Ausführungsform beinhaltet das Reaktionsharzsystem die näher spezifizierten Bestandteile in den in dem dritten Aspekt angeführten Mengen.

In einer besonders bevorzugten fünften Ausführungsform des Reaktionsharzsystems enthält die Harzkomponente:
- mindestens eine Verbindung auf Urethan(meth)acrylatbasis als Reaktionsharz,
- mindestens einen Reaktivverdünner,
- mindestens einen Inhibitor,
- mindestens einen Beschleuniger, und
- mindestens einen anorganischen Füllstoff mit hydrophilen Eigenschaften,
und die Harzkomponente enthält:
- mindestens ein Härtungsmittel, welches ein festes Peroxid ist,
- Wasser, und
- ein als Rheologieadditiv auf Basis eines quellfähigen Schichtsilikats.

In einem bevorzugten Aspekt dieser Ausführungsform ist das feste Peroxid in dem Wasser suspendiert. In einem weiter bevorzugten Aspekt dieser fünften Ausführungsform beinhaltet das Reaktionsharzsystem die näher spezifizierten Bestandteile in den in dem dritten Aspekt angeführten Mengen.

In einer weiter besonders bevorzugten sechsten Ausführungsform des Reaktionsharzsystems enthält die Harzkomponente:
- mindestens eine Verbindung auf Urethan(meth)acrylatbasis Reaktionsharz,
- mindestens einen Reaktivverdünner,
- mindestens einen Inhibitor,
- mindestens einen Beschleuniger, und
- mindestens einen anorganischen Füllstoff mit hydrophilen Eigenschaften,
und die Harzkomponente enthält:
- mindestens ein Härtungsmittel, welches ein festes Peroxid, insbesondere Dibenzoylperoxid, ist,
- Wasser, und
- ein Rheologieadditiv auf Basis eines quellfähigen Magnesium-Aluminium-Silikats oder eines Natrium-Aluminium-Silikats.

In einem bevorzugten Aspekt dieser Ausführungsform ist das feste Peroxid in dem Wasser suspendiert. In einem weiter bevorzugten Aspekt dieser sechsten Ausführungsform beinhaltet das Reaktionsharzsystem die näher spezifizierten Bestandteile in den in dem dritten Aspekt angeführten Mengen.

In einer ganz besonders bevorzugten siebten Ausführungsform des Reaktionsharzsystems einhält die Harzkomponente:
- mindestens eine Verbindung auf Urethan(meth)acrylatbasis als Reaktionsharz,
- mindestens einen Reaktivverdünner,
- mindestens einen Inhibitor,
- mindestens einen Beschleuniger, und
- mindestens einen anorganischen Füllstoff mit hydrophilen Eigenschaften eine hydrophile pyrogene Kieselsäure als anorganischen Füllstoff mit hydrophilen Eigenschaften,
und die Harzkomponente enthält:
- mindestens ein Härtungsmittel, welches ein festes Peroxid, insbesondere Dibenzoylperoxid, ist,
- Wasser, und
- Bentonit als Rheologieadditiv auf Schichtsilikatbasis.

In einem bevorzugten Aspekt dieser Ausführungsform ist das feste Peroxid in dem Wasser suspendiert. In einem weiter bevorzugten Aspekt dieser siebten Ausführungsform beinhaltet das Reaktionsharzsystem die näher spezifizierten Bestandteile in den in dem dritten Aspekt angeführten Mengen.

In einer ganz besonders bevorzugten achten Ausführungsform des Reaktionsharzsystems einhält die Harzkomponente:
- mindestens eine Verbindung auf Urethan(meth)acrylatbasis als Reaktionsharz,
- mindestens einen Reaktivverdünner,
- mindestens einen Inhibitor,
- mindestens einen Beschleuniger, und
- mindestens eine hydrophile pyrogene Kieselsäure als anorganischen Füllstoff mit hydrophilen Eigenschaften,
und die Harzkomponente enthält:
- mindestens ein Härtungsmittel, welches ein festes Peroxid, insbesondere Dibenzoylperoxid, ist,
- Wasser, und
- Bentonit als Rheologieadditiv auf Schichtsilikatbasis.

In einem bevorzugten Aspekt dieser Ausführungsform ist das feste Peroxid in dem Wasser suspendiert. In einem weiter bevorzugten Aspekt dieser achten Ausführungsform beinhaltet das Reaktionsharzsystem die näher spezifizierten Bestandteile in den in dem dritten Aspekt angeführten Mengen.

Erfindungsgemäß wird das Rheologieadditiv auf Basis eines Schichtsilikats in einem mehrkomponentigen Reaktionsharz-System verwendet, typischerweise einem Zweikomponenten-System. Dieses Mehrkomponenten-System kann in Form eines Patronen-Systems oder eines Folienbeutel-Systems vorliegen. Das Reaktionsharzsystem wird mit gewindeformenden Schrauben in Löchern verwendet. Die Löcher können Vertiefungen natürlichen oder nicht-natürlichen Ursprungs sein, also Risse, Spalten, Bohrlöcher und dergleichen. Es sind typischerweise Bohrlöcher, insbesondere Bohrlöcher in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl.

Das Reaktionsharz-System, in welchem erfindungsgemäß das quellfähige Schichtsilikat als Rheologieadditiv verwendet wird, wird erfindungsgemäß mit gewindeformenden Schrauben in Löchern verwendet. Die Löcher können Vertiefungen natürlichen oder nicht-natürlichen Ursprungs sein, also Risse, Spalten, Bohrlöcher und dergleichen. Es sind typischerweise Bohrlöcher, insbesondere Bohrlöcher in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl.

Die Reaktionsharz-Zusammensetzung, in welcher das quellfähige Schichtsilikat erfindungsgemäß als Rheologieadditiv verwendet wird, zeichnet sich durch eine niedrige Viskosität der dieses Additiv enthaltenden Komponente sowie eine erhöhte Lagerstabilität der Komponente aus im Vergleich zu Ausführungsformen ohne das verwendete Rheologieadditiv oder zu Ausführungsformen mit anderen Rheologieadditiven, welche kein Schichtsilikat enthalten.

Die Erfindung wird im Folgenden anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### AUSFÜHRUNGSBEISPIELE

### Liste der in den Beispielen und Referenzen verwendeten Bestandteile (Erklärung der Abkürzungen) sowie ihrer Handelsnamen und Bezugsquellen:

| | |
|---|---|
| Aerosil® 200 | hydrophile, pyrogene Kieselsäure; Fa. Evonik (CAS-Nr: 112945-52-5; spez. Oberfläche 200m²/g; mittlere Teilchengröße 0,2-0,3 µm (Aggregate)) |
| Optigel-CK | aktiviertes Schichtsilikat (Bentonit); Fa. BYK-Chemie GmbH (spez. Dichte 2,6 g/cm³, Schüttdichte 550-750 kg/m³, Feuchtigkeitsgehalt 10 % ± 2 %) |
| Optigel-WX | aktiviertes Schichtsilikat (Bentonit) mit Xanthan; Fa. BYK-Chemie GmbH (spez. Dichte 2,2 g/cm³, Schüttdichte 500-650 kg/m³, Feuchtigkeitsgehalt max. 13 %) |
| Xanthan XGT TNAS | Xanthan; Fa. Jungbunzlauer Austria AG (CAS-Nr. 11138-66-2) |
| BP20SAQ | Dibenzoylperoxid 20%, Suspension in Wasser; Fa. United Initiators GmbH & Co. KG |

Es wurden Mischungen aus Benzoylperoxid, 20%-ige wässrigen Suspension, mit unterschiedlichen Verdickungsmitteln in unterschiedlichen Konzentrationen, wie in Tabelle 1 angegeben, hergestellt, indem die Benzoylperoxid-Syspension vorgelegt und das jeweilige Additiv zugegeben wurde. Die Mischung wurde zuerst per Hand vorgerührt und anschließend im Speedmixer (High Speed Mixer DAC 400 FVZ; Fa. Hauschild & Co. KG) nach folgendem Programm gemischt, bis der Verdicker gut eingearbeitet war:

| | |
|---|---|
| Mischprogramm: | 10 Sek. bei 1000U/min, |
| | 20 Sek. bei 2500 U/min. |
| | 15 Sek. bei 1500U/min. |

### Messung der dynamischen Viskosität der Härter-Verdicker-Mischungen (Härterzusammensetzungen)

Die Messung der dynamischen Viskosität der erfindungsgemäßen Härter-Verdicker-Mischungen (Härterzusammensetzungen) (Tabelle 1) erfolgte mit einem Platte-Kegel-Messsystem (HAAKE® RheoStress® RS600 mit Temperiergerät UTC-20, Messgeometrie C20/1° Ti L01 026) nach DIN 53019. Der Durchmesser des Kegels betrug 20 mm, der Winkel 1° und der Spalt betrug 0,052 mm. Es wurde bei einer konstanten Schergeschwindigkeit von 25 U/min bei einer Temperatur von 23°C gemessen. Die Messdauer betrug 180s. Zur Erreichung der Schergeschwindigkeit wurde zunächst die Probe 30 s bei 23°C gehalten, anschließend eine Rampe von 0-25 U/min mit einer Dauer von 120 s vorgeschaltet. Da es sich um newtonschen Flüssigkeiten handelt, wurde über den Messabschnitt mit konstanter Schergeschwindigkeit von 100/s eine lineare Auswertung über den Messabschnitt vorgenommen und die Viskosität bestimmt. Es wurden jeweils drei Messungen gemacht, wobei in Tabelle 1 jeweils die Mittelwerte angegeben sind.

**Tabelle 1: Zusammensetzung der erfindungsgemäßen Härterzusammensetzungen und Ergebnisse der Viskositätsmessungen der frisch hergestellten erfindungsgemäßen Härterzusammensetzungen und nach 16 Wochen Lagerung bei 40°C**

| | | Frisch hergestellte erfindungsgemäße Härterzusammensetzung | | erfindungsgemäße Härterzusammensetzung nach Lagerung über 16 Wochen bei 40°C | |
|---|---|---|---|---|---|
| **Verdicker** | **Anteil Verdicker [Gew. %]** | **Viskosität [mPa·s]** | **Beurteilung der Konsistenz** | **Viskosität [mPa·s]** | **Beurteilung der Konsistenz** |
| Optigel CK | 1 | 136 | fließfähig, leichte Entmischung | 175 | keine Sedimentation, fließfähig |
| Optigel CK | 2 | 155 | fließfähig, leichte Entmischung | 203 | keine Sedimentation, fließfähig, |
| Optigel CK | 3 | 192 | noch fließfähig, leichte Entmischung | 250 | keine Sedimentation, fließfähig |
| Optigel CK | 4 | 249 | noch fließfähig | 325 | keine Sedimentation, noch fließfähig |

**Tabelle 2: Zusammensetzung der Vergleichshärterzusammensetzungen und Ergebnisse der Viskositätsmessungen der frisch hergestellten Vergleichshärterzusammensetzungen und nach 16 Wochen Lagerung bei 40°C**

| | | Frisch hergestellte Vergleichshärterzusammensetzungen | | Vergleichshärterzusammensetzungen nach Lagerung über 16 Wochen bei 40°C | |
|---|---|---|---|---|---|
| **Verdicker** | **Anteil Verdicker [Gew. %]** | **Viskosität [mPa·s]** | **Beurteilung der Konsistenz** | **Viskosität [mPa·s]** | **Beurteilung der Konsistenz** |
| Ohne ¹⁾ | 0 | 121 | | | |
| | | | | | |
| Aerosil 200 | 0,5 | 155 | fließfähig | nicht gemessen | starke Sedimentation |
| Aerosil 200 | 1 | 186 | fließfähig, leicht verdickt | nicht gemessen | starke Sedimentation |
| Aerosil 200 | 2 | 355 | nicht mehr fließfähig | 338 | verdickt, oben Absetzen von etwas Flüssigkeit |
| Aerosil 200 | 3 | 694 | nicht fließfähig, noch nutzbar | 430 | verdickt, oben Absetzen von etwas Flüssigkeit |
| Aerosil 200 | 4 | 883 | wie Nr.3, nur viskoser | 530 | sehr stark verdickt, Absetzen von Flüssigkeit |
| Optigel WX | 0,15 | 163 | gut fließfähig, etwas verdickt | nicht gemessen | Sedimentation |
| Optigel WX | 0,25 | 170 | fließfähig, verdickt | nicht gemessen | Sedimentation |
| Optigel WX | 0,5 | 200 | noch fließfähig aber recht stark verdickt | nicht gemessen | Sedimentation |
| Xanthan XGT TNAS | 0,1 | 135 | fließfähig | nicht gemessen | Sedimentation |
| Xanthan XGT TNAS | 0,15 | 152 | fließfähig | nicht gemessen | Sedimentation |
| Xanthan XGT TNAS | 0,25 | 215 | fließfähig, etwas zu dick | nicht gemessen | Sedimentation |
| Xanthan XGT TNAS | 0,5 | 329 | fließfähig, aber zu dick | nicht gemessen | Sedimentation |
| Xanthan XGT TNAS | 1 | 480 | nicht mehr fließfähig, zu fest | 480 | keine Sedimentation, nicht fließfähig |

| | | | | | |
|---|---|---|---|---|---|
| ¹⁾ 100% BP20SAQ | | | | | |

Die in Tabelle 1 gezeigten Ergebnisse der Messungen der dynamischen Viskosität zeigen, dass die frisch hergestellten erfindungsgemäßen Härterzusammensetzungen eine Viskosität im Bereich von 136 mPa·s bis 249 mPa·s, abhängig von der verwendeten Menge, liegen und damit noch fließfähig waren. Nach Lagerung über 16 Wochen bei 40°C wurde keine Sedimentation des Peroxids beobachtet und die Härterzusammensetzungen waren alle fließfähig, selbst bei einem Verdickeranteil von 4 Gew.-%.

Die in Tabelle 2 gezeigten Ergebnisse der Messungen der dynamischen Viskosität zeigen, dass die frisch hergestellten Vergleichs-Härterzusammensetzungen, abhängig von der verwendeten Menge des Verdickers, teilweise noch fließfähig waren. Ein Teil der Vergleichs-Härterzusammensetzungen jedoch wies eine so hohe Viskosität auf, dass diese nicht mehr fließfähig waren. Nach Lagerung über 16 Wochen bei + 40°C war ein Teil der Vergleichs-Härterzusammensetzungen sehr stark verdickt und ein Absetzen des festen Peroxids wurde beobachtet. Bei dem anderen Teil wurde Sedimentation des Peroxids beobachtet. Die Lagerstabilität war damit nicht gegeben.

Aus den in den Tabellen 1 und 2 gezeigten Ergebnisse der Messungen der dynamischen Viskosität der erfindungsgemäßen Härterzusammensetzungen (Tabelle 1) und der Vergleichs-Härterzusammensetzungen (Tabelle 2) zeigen, dass die erfindungsgemäßen Härterzusammensetzungen nach Lagerung fließfähig blieben und keine Sedimentation zeigten, verglichen mit den Vergleichs-Härterzusammensetzungen.

Es konnte also eine Härterzusammensetzung entwickelt werden, die bei der Verwendung von wässrigen Peroxidsuspensionen die Lagerstabilität der Komponente sicherstellen konnte.

## Patentansprüche

1. Härterzusammensetzung für ein Reaktionsharzsystem auf Basis einer radikalisch härtbaren Verbindung, umfassend Wasser, ein festes Peroxid und ein Rheologieadditiv, wobei das Rheologieadditiv ein Rheologieadditiv auf Basis eines Schichtsilikats ist.

2. Härterzusammensetzung nach Anspruch 1, wobei das Schichtsilikat ein quellfähiges Schichtsilikat ist.

3. Härterzusammensetzung nach Anspruch 2, wobei das quellfähige Schichtsilikat ein Magnesium-Aluminium-Silikat oder ein Natrium-Aluminium-Silikat ist.

4. Härterzusammensetzung nach Anspruch 2 oder 3, wobei das Rheologieadditiv aus dem quellfähigen Schichtsilikat besteht oder dieses als wesentlichen Bestandteil/Hauptbestandteil enthält.

5. Härterzusammensetzung nach Anspruch 4, wobei das Rheologieadditiv Montmorillonit ist oder dieses als wesentlichen Bestandteil/Hauptbestandteil enthält.

6. Härterzusammensetzung nach Anspruch 5, wobei das Rheologieadditiv Bentonit ist.

7. Härterzusammensetzung nach einem der vorhergehenden Ansprüche, wobei das Rheologieadditiv in einer Menge von 0,15 bis 5 Gew.-%, bezogen auf das Gesamtgewicht der Härterzusammensetzung, enthalten ist.

8. Härterzusammensetzung nach einem der vorhergehenden Ansprüche, wobei das Wasser und das feste Peroxid in Form einer Suspension vorliegen.

9. Härterzusammensetzung nach einem der vorhergehenden Ansprüche, wobei das Peroxid aus der Gruppe bestehend aus Diacetylperoxid, Di-p-chlorobenzoylperoxid, Phthaloylperoxid, Succinylperoxid, Dilaurylperoxid, Acetylcyclohexansulfonylperoxid, Cyclohexanpercarbonat, Bis(4-*t-*butylcyclohexyl)percarbonat, Siliciumperoxid, Cyclohexanonperoxid, Dibenzoylperoxid und Dilauroylperoxid ausgewählt ist.

10. Mehrkomponentiges Reaktionsharzsystem, mit einer Harzkomponente, umfassend eine radikalisch härtbare Verbindung, und mit einer Härterzusammensetzung, umfassend eine Härterzusammensetzung nach einem der Ansprüche 1 bis 9.

11. Mehrkomponentiges Reaktionsharzsystem nach Anspruch 10, **dadurch gekennzeichnet, dass** die radikalisch härtbare Verbindung wenigstens ein Reaktionsharz, wenigstens einen Reaktivverdünner oder eine Mischung aus wenigstens einem Reaktionsharz und einem Reaktivverdünner umfasst.

12. Mehrkomponentiges Reaktionsharzsystem nach Anspruch 11, **dadurch gekennzeichnet, dass** das Reaktionsharz eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen ist.

13. Mehrkomponentiges Reaktionsharzsystem nach einem der Ansprüche 10 bis 12, **dadurch gekennzeichnet, dass** die Harzkomponente ferner einen anorganischen Zuschlagstoff umfasst.

14. Mehrkomponentiges Reaktionsharzsystem nach Anspruch 13, **dadurch gekennzeichnet, dass** der anorganische Zuschlagstoff hydrophile Eigenschaften aufweist.

15. Mehrkomponentiges Reaktionsharzsystem nach einem der Ansprüche 10 bis 14, **dadurch gekennzeichnet, dass** die Harzkomponente ferner einen Inhibitor und/oder einen Beschleuniger umfasst.

16. Mehrkomponentiges Reaktionsharzsystem nach einem der Ansprüche 10 bis 14, **dadurch gekennzeichnet, dass** es ein Zweikomponenten-Beutelsystem ist.

17. Verwendung eines mehrkomponentigen Reaktionsharzsystems nach einem der Ansprüche 10 bis 16 zur Befestigung und/oder Verstärkung von gewindeformenden Schrauben in festen Untergründen, insbesondere in Stein oder Beton.
